# EUROPEAN PATENT APPLICATION

(11) **EP 2 258 614 A1**
(43) Date of publication of application: **08.12.2010**
(21) Application number: 09718433.7
(22) Date of filing: 04.03.2009
(51) Int. Cl.: B63B 35/32, E02B 15/04

(54) **VESSEL FOR COLLECTING PETROLEUM PRODUCTS**

(30) Priority: 07.03.2008 ES 200800677; 18.02.2009 ES 200900453
(71) Applicant: Zori Garcia, Tomas, 28109 Alcobendas (Madrid) (ES)
(72) Inventor: Zori Garcia, Tomas, 28109 Alcobendas (Madrid) (ES)
(74) Representative: Toro Gordillo, Ignacio Maria
(86) International application number: PCT/ES2009/000115
(87) International publication number: WO 2009/109678

(57) **Abstract**

The invention relates to a vessel for collecting petroleum products, in which an Archimedean screw (4) is used to collect spills, which vessel comprises a T-shaped hull with a central longitudinal narrow body (1) and a front transverse segment (3), said hull having no keel and being provided with a planar base, thereby conferring minimum draft thereon, of the order of 50 cm. The containers, which are independent of the hull (1), are mounted to either side of same and the relative height thereof can be varied in relation to the hull depending on the load level. In addition, each container can be removed in order to be emptied. Consequently the vessel can operate at beaches, ports, rias or any other low-draft areas.

## Description

### Object of the Invention

The present invention relates to a vessel which has been especially designed for collecting oil spills at sea as a consequence of accidents sustained by oil tankers or of other causes, i.e., for collecting what is commonly referred to as "oil slick".

The object of the invention is to achieve a vessel that is capable of performing said collecting of oil spills in low-draft areas, as mostly occurs along a wide maritime strip adjacent to the coast, including beaches, ports, rias, and even lakes.

The invention is therefore comprised in the field of environmental protection, particularly in the elimination and surface collection of contaminating products which float on the water, and more particularly hydrocarbons.

### Background of the Invention

The applicant is the proprietor of Spanish invention patent application number P 200300087, consisting of a device for cleaning up oil spills, intended to be coupled to the hull of a vessel, on each side thereof. More specifically, said device consists of an arm made up of a casing with a configuration tending to a semicylinder, the inside of which houses a screw tending to displace the crude oil towards the hull of the vessel, which casing is stiffened by means of a plurality of rear plates and is open forwards and upwards, the arm having a float at its free end and finished at its free end in a collection tank in which the mentioned screw unloads and in which there is arranged the drive transmission mechanism for same, as well as a tube connected to a suction pump propelling the crude oil towards the collection vessel.

This device, which can be applied to any conventional vessel having collection tanks with a suitable capacity, offers optimal functional features in terms of the product collection capacity per unit of time.

However, such device has an important problem derived more from the vessel in which it is coupled than from its own structure, because vessels with a suitable spill storage capacity base their stability, as in most vessels, on the lower keel thereof, which entails a draft of such magnitude that it means that conventional vessels cannot navigate in areas close to the coasts, and even less so in beaches, ports, rias, lakes, etc.

If the fact that the movement of the water tends to displace spills precisely towards the coasts is taken into account, the severity of the problem set forth is evident.

### Description of the Invention

The vessel for collecting oil spills proposed by the invention has been designed and structured exclusively for this purpose, and its objective is to achieve a large load capacity while at the same time achieving such a low draft level that it allows its navigation from the high sea to the coast, because said draft depth can be about 50 cm.

To that end and more specifically, the proposed vessel adopts a T-shaped front transverse segment, said vessel having no keel, i.e., it has a launch-type planar hull base, but with considerably larger dimensions than the latter, said front transverse segment being the segment which, as a result of its considerable width, provides the vessel with due stability during its navigation.

The Archimedean screw, similar to the one in invention patent P 200300087, is located in the front transverse head or segment of the mentioned T shape, duly opposite an inlet mouth which concerns the entire front face of the head and which converges towards the mentioned Archimedean screw, there being enough space in said head for arranging therein the operating means of the mentioned Archimedean screw, preferably a hydraulic motor, as well as the drive pumps for driving the collected oil spills towards the storage tanks.

These storage tanks are located on both sides of the body of the vessel, immediately behind the corresponding end areas of the front transverse head, and they have the particularity of being physically independent from the hull of the vessel, whereby being linked through vertical guides immobilizing said containers in the transverse direction, but allowing their mobility in the vertical direction, such that the draft of the containers is virtually nil when they are empty and gradually increases as the load or filling thereof increases, up to a limit situation determined by the depth of the water in the work area.

The hull of the vessel incorporates on its upper side areas and at the level of its longitudinal body cocks for unloading the spills driven by the mentioned pumps in either of the containers mentioned, or in either of the compartments that said containers can be provided with.

It must also be pointed out that said containers can easily be separated from the hull of the vessel, such that after the vessel reaches a port it is not necessary to immediately empty the containers, but rather they can be replaced with empty containers so that the vessel can continue working while the full containers are being emptied.

It must finally be indicated that the front head of the vessel is linked to the longitudinal body thereof through oscillation means which allow sufficiently tilting said head in order to prevent the entrance of water and spills towards the area where the Archimedean screw is located, said head acting through its lower face as a stabilizing means for the vessel, which allows its movement at considerably higher speeds than when it is in the working situation. In any case, the vessel is driven by propulsion equipment with an inboard/outboard system.

In those cases in which the waste to be collected has a low density, the waste is displaced together with the water in the thrusting exerted by the transverse head on said water, due to the normal forward movement of the vessel, which evidently means that the waste in question will access with certain difficulty the Archimedean screw.

To solve this problem, it has been provided that in front of the Archimedean screw there is an also transverse shaft that is provided with a plurality of radial blades, such that as a result of the motor-powered operation of this shaft, the blades, with a suitable rotation direction, act on the oil waste by introducing it in the head, i.e., displacing it towards the Archimedean screw, so the efficiency of the vessel in collecting such waste is optimal.

Evidently, the front transverse head of the vessel will be suitably oversized in order to receive therein the blade-carrying shaft, such that the latter is in turn behind the front inclined planes which favor the access of oil spills to the mentioned head.

These blades can optionally be provided with, in their majority portion, rectangular windows minimizing both their weight and the amount of material used therein, but without the strength of said windows being a determining factor.

In any case, the thrust effect of the bow of the vessel on the water, which tends to displace the waste, is compensated by the absorption effect of said waste caused by the rotation of the blade-carrying shaft, whereby the performance of the vessel is optimal, as has been mentioned above.

The mentioned blade-carrying shaft can have its own motor-powered operation, housed in the hollow interior of the sides of the front head, or it can share the motor-powered operation with the Archimedean screw, without this affecting the essence of the invention.

Finally, and in an embodiment variant, it has been provided that this blade-carrying shaft and the Archimedean screw itself include rollers for raising the waste so that when the blades rotate, such waste is raised towards the Archimedean screw by means of the mentioned rollers,.

### Description of the Drawings

To complement the description made below and for the purpose of aiding to better understand the features of the invention according to a preferred practical embodiment thereof, a set of drawings is attached as an integral part of said description in which the following has been depicted with an illustrative and non-limiting character:

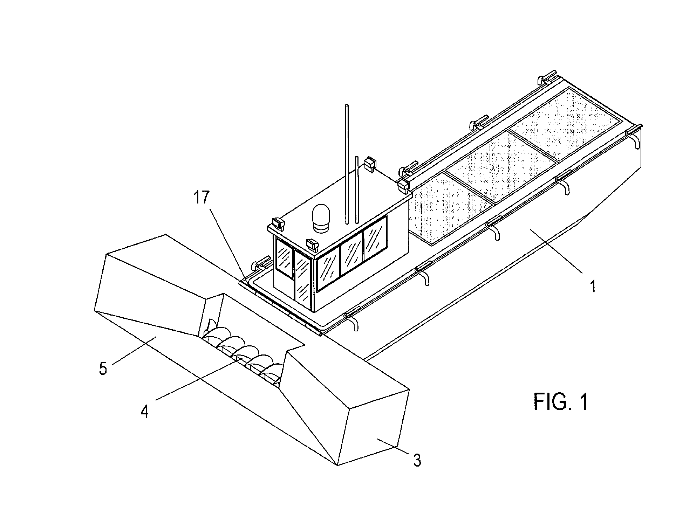

Figure 1 shows, according to a schematic perspective depiction, a vessel for collecting oil spills carried out according to the object of the present invention, lacking the side containers for receiving the spill.
Figure 2 shows a plan view of the assembly depicted in Figure 1, in this case the vessel being provided with the mentioned containers for receiving the spill.
Figure 3 shows a side elevational view of the vessel of the previous figures.
Figure 4 shows a section similar to that of Figure 3, but in which the front head of the vessel is in a raised position, inoperative from the collecting point of view.
Figure 5 shows a plan view of a detail at the level of one of the coupling guides between the hull of the vessel and the side containers thereof.
Figure 6 shows a perspective view of a detail of the front area of the vessel corresponding to a practical embodiment variant of the invention, in which before the Archimedean screw there is a motor-powered shaft provided with a plurality of blades facilitating the collection of the waste.
Figure 7 shows a side elevational view of a detail of the assembly of the previous figure.
Figure 8 shows a plan view of what has been depicted in the previous figure.
Figure 9 finally shows a side elevational view of Figure 6, but in this case arranging between the assembly of blades and the Archimedean screw a band of rollers for raising the waste towards the Archimedean screw itself.

### Preferred Embodiment of the Invention

In view of the discussed figures, it can be observed how the proposed vessel is formed from a considerably elongated hull (1) with a planar base, i.e., having no keel, at the front end of which there is coupled a transversely elongated head (3) conferring to the vessel in its assembly a T-shaped hull, there being located in the central area of said head (3) an Archimedean screw (4), like the one in the aforementioned invention patent, towards which screw the floating spills access through inclined planes (5), this head (3) having covers or manholes (6) for accessing its interior, in which both the operating means of the Archimedean screw (4) and the pumps (7-8) for driving the spills towards the collection tanks (9-9') for said spills are arranged.

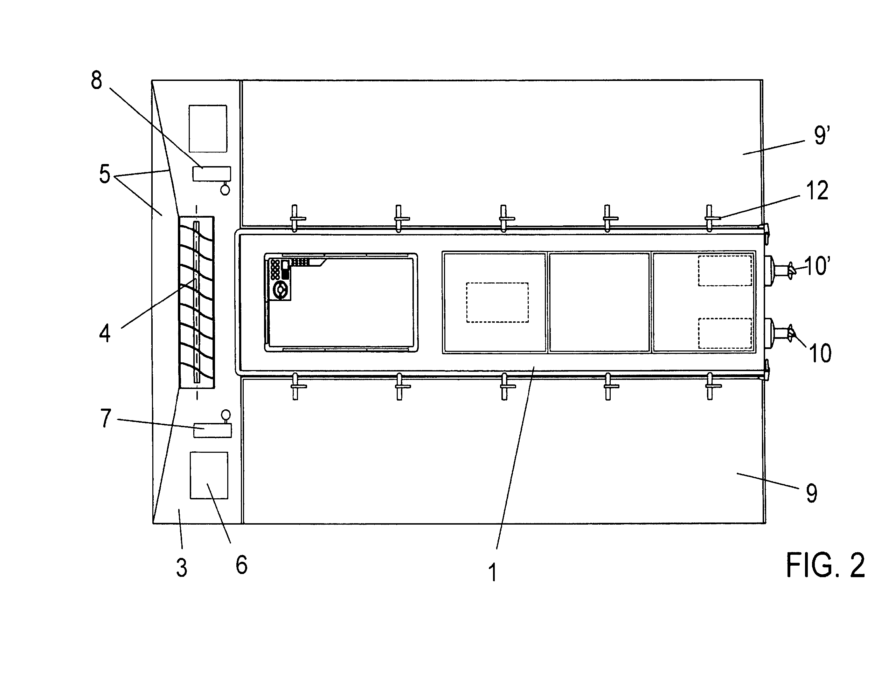

As is particularly observed in Figure 2, the mentioned tanks or containers (9-9') for collecting the spill take up the spaces defined behind the head (3) and on both sides of the central body (1) of the vessel, converting the mentioned T shape thereof into a rectangular shape, and in which, according to a preferred embodiment of the invention, the draft of said body (1) is of the order of 50 cm, whereas the draft of the containers (9-9') is variable, as will be explained below, the vessel having a total girder of 14 meters, a maximum breadth of 9 meters, a collection capacity maximum of the order of 102 m³ (approximately 100 tons depending on the density of the collected product), and the movement of the vessel is carried out, as previously mentioned, by means of propulsion equipment with an inboard/outboard system equipped with two injection motors (10-10') having 160 horsepower each, whereas for supplying the motors of the pumps (7-8) and of the Archimedean screw (4), the vessel incorporates a diesel motor (11) having 158 horsepower at 1,800 rpm, with emergency stop, alarm, tachometer, horometer and start-up switchboard, as well as with a gear box with coupling for the pumps, and tanks for hydraulic oil and fuel.

The vessel is complemented with a control post provided with the operating control instruments for the motors and the navigation and safety instruments, suited to the navigation particularities of these vessels.

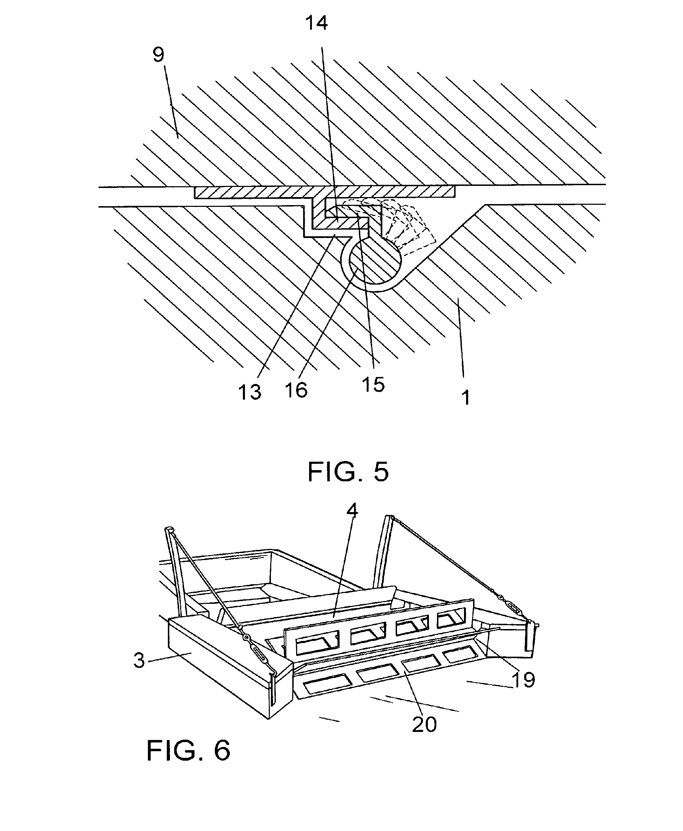

Returning again to the tanks or containers (9-9'), the latter receive the spilled hydrocarbons collected by the Archimedean screw (4) through cocks (12) distributed along the upper side areas of the elongated body (1) of the vessel, which body in its side walls incorporates at least one pair of vertical guides (13), one of which is depicted in detail in Figure 5, which guides (13) are intended to receive respective complementary guides (14) duly integral with or fixed to the inner side wall of the containers (9-9'), with the particularity that each guide (13) of the body (1) of the vessel is defined by the body (1) itself and by an oscillating section (15) that can turn on a vertical shaft (16), such that depending on the position adopted by said section (15) the floats (9-9') are immobilized with respect to the hull of the vessel in the transverse direction, but with the possibility of displacement in the vertical direction, or they are released for their transport towards the area for emptying them.

These guides (13-14) allow the draft of said containers to range between 0.1 and 1.5 meters, depending on the load stored therein. In terms of transferring the containers (9-9') to the spill area, this can be done by towing them with small vessels or with helicopters, nevertheless the vessel itself could perform this displacement, which is not advisable given that the collecting efficiency is thereby reduced.

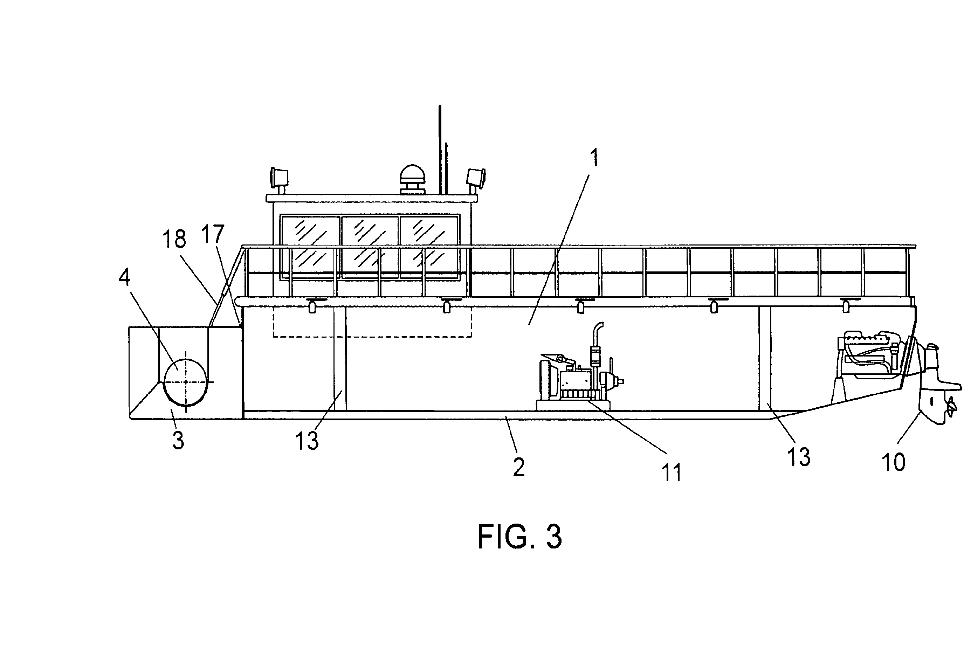

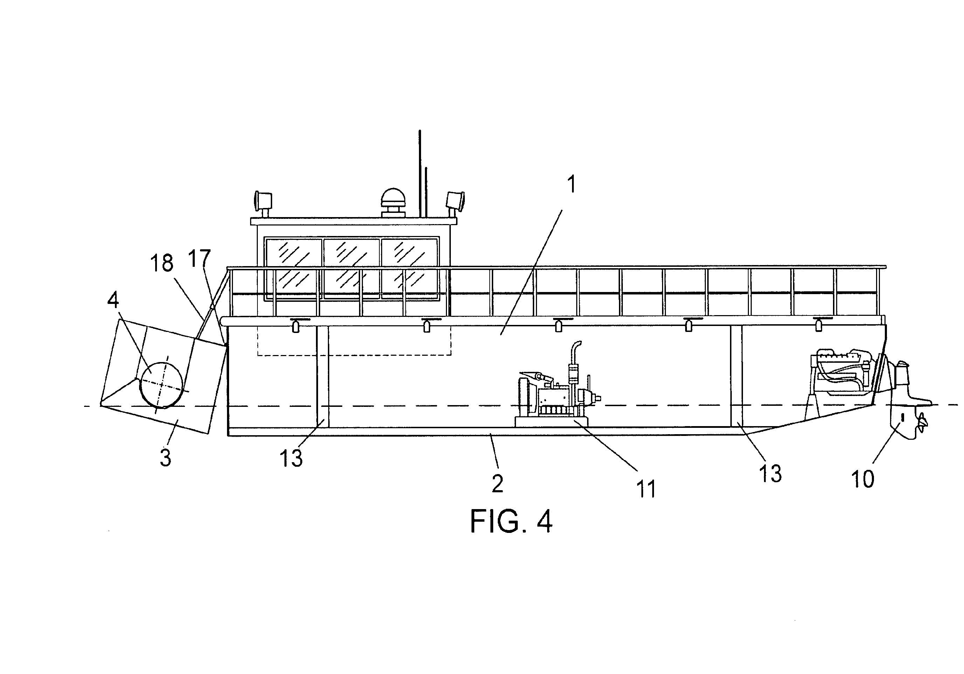

In any case and as is observed in Figure 4, the front transverse head (3) is attached in an articulated manner to the longitudinal body (1) forming the hull of the vessel, for example through a robust hinge (17), such that with the collaboration of a pair of hydraulic cylinders (18), the head (3) can go from the working position shown in Figure 3 to the inoperative position shown in Figure 4, where access to the Archimedean screw (4) is temporarily blocked, allowing greater speed for the vessel when it heads towards the work area, when it displaces the full containers towards the area for emptying them, and generally when it is inoperative from the collecting point of view per se.

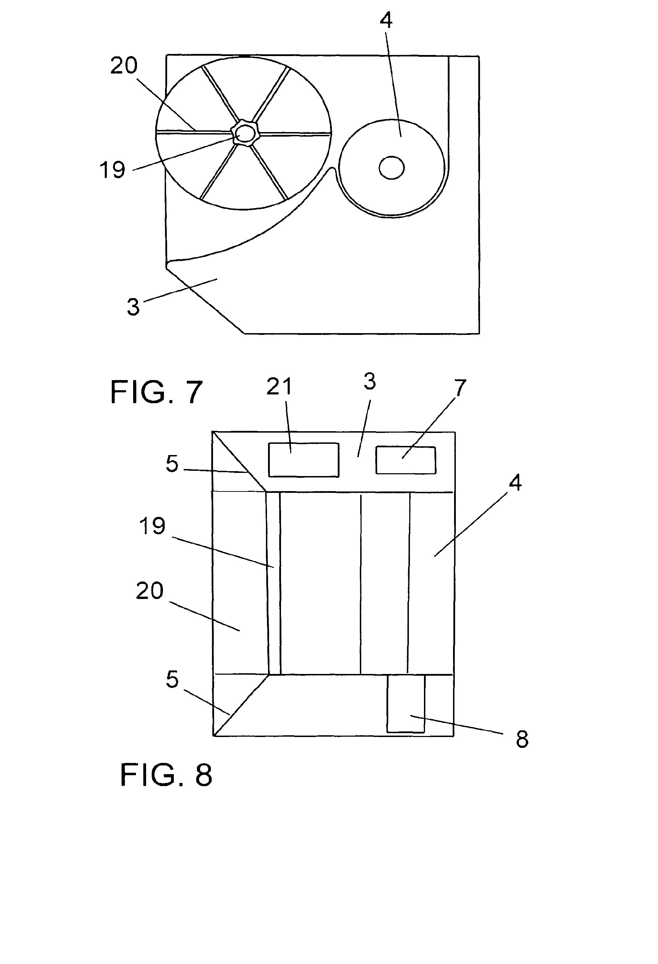

In the embodiment variant shown in Figures 6, 7 and 8, it can be seen how the head (3) transversely and in front of the Archimedean screw (4) incorporates a shaft (19) provided with a plurality of radial blades (20), such that the shaft (19) and therefore the blades (20) can be operated by the same drive elements or means of the Archimedean screw (4), or they can be operated by an independent motor (21) located in one of the side parts of the head (4) itself.

Thus and according to the rotation of the shaft (19) and therefore of the blades (20), the floating waste in the water will be introduced in the head (3) and will reach the Archimedean screw (4) itself, the collection of the waste therefore being completely efficient, whether the waste is low or high viscosity waste.

The shaft (19) of the blades (20) is located behind the inclined planes (5) which are arranged in the front of the head (3), through which access of the oil waste to the head itself is established.

As previously stated, these blades (20) may or may not have rectangular windows minimizing their weight, but they always will have suitable dimensions so that the blades (20) themselves offer sufficient rigidity and strength in driving and introducing the waste towards the head (3).

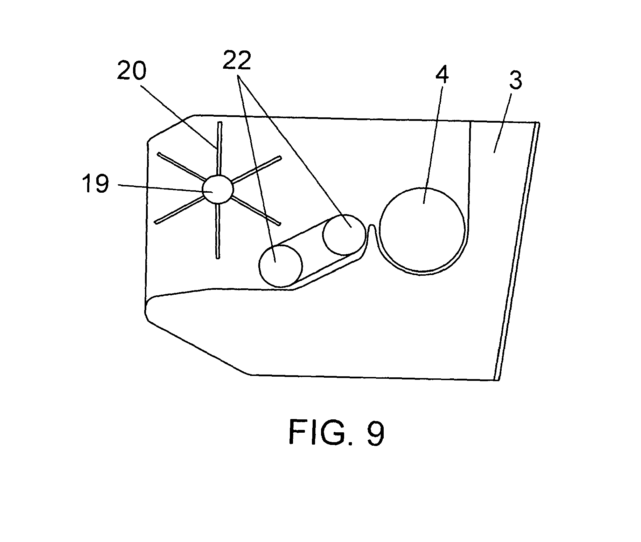

Finally, Figure 9 shows how rollers (22) for raising are located between the shaft (19) with its blades (20) and the Archimedean screw (4) itself, the waste raised in the rotation of the blades (20) being discharged in the rollers for raising such waste towards the Archimedean screw (4), supplied thereto.

## Claims

1. A vessel for collecting oil spills, wherein an Archimedean screw (4) is used as a collection means, which screw collects floating spills and with the collaboration of drive pumps, directs them towards one or more storage tanks, **characterized in that** it has a T-shaped hull, said hull having no keel and a planar base, the front transverse segment (3) of the mentioned T-shape forming a head in which there are arranged the Archimedean screw (4), taking up its central area, and the drive pumps (7-8) taking up its side areas, the latter being communicated through conduits with cocks (12) on the upper side area of the central longitudinal segment of the T-shaped hull and which are provided with cocks (12) for the controlled access to a pair of side tanks or containers (9-9'), which take up the spaces defined on both sides in the hull (1) and behind the front head (3), said containers (9-9') being immobilized in the transverse direction with respect to the hull of the vessel, but their relative height position can be varied, all in such a way that the hull of the vessel has a constant draft of the order of 50 centimeters, whereas the draft of the containers is variable and is comprised between 0.1 and 1.5 meters.

2. The vessel for collecting oil spills according to claim 1, **characterized in that** in its stern area, it incorporates inboard/outboard propulsion equipment in which there are two motors, preferably injection motors, whereas the motor for operating the pumps and the Archimedean screw are arranged within the hull.

3. The vessel for collecting oil spills according to claim 1, **characterized in that** at least one pair of vertical guides (13) is arranged on each side in the central longitudinal body (1) of the hull of the vessel for the displacement of complementary guides (14) integral with the corresponding container (9-9') in order to allow the relative vertical movement between the containers and the hull, the guides (13) of the hull (1) being formed as oscillating sections (15) on vertical shafts (16), which allow unlocking or releasing the containers (9 -9') from the hull (1) in the operations for unloading them.

4. The vessel for collecting oil spills according to claim 1, **characterized in that** the front head (3) carrying the Archimedean screw (4) is mounted in an oscillating manner on the longitudinal body (1) of the hull, through a robust hinge (17) or the like, such that said head (3) is operated by hydraulic cylinders (18) in order to adopt an inclined position in which the Archimedean screw (4) is inoperative, when the vessel is out of service.

5. The vessel for collecting oil spills according to the previous claims, **characterized in that** in front of the Archimedean screw (4) there has been provided a transverse shaft (19) carrying a plurality of radial blades (20) which are rotated to introduce the oil waste towards the Archimedean screw (4) itself, whether it is high or low viscosity waste.

6. The vessel for collecting oil spills according to claim 5, **characterized in that** the shaft (19) carrying the blades (20) is operated by means of a geared motor (21).

7. The vessel for collecting oil spills according to claim 5, **characterized in that** the shaft (19) carrying the blades (20) is operated by the operating means themselves of the Archimedean screw (4).

8. The vessel for collecting oil spills according to claims 5 to 7, **characterized in that** rollers (22) for raising the waste collected by the blades (20) towards the Archimedean screw (4) itself are mounted between the Archimedean screw (4) and the shaft (19) with its blades (20).
